# EUROPÄISCHE PATENTSCHRIFT

(11) **EP 0 887 583 B1**
(45) Veröffentlichungstag und Bekanntmachung des Hinweises auf die Patenterteilung: **05.11.2003**
(21) Anmeldenummer: 98710009.6
(22) Anmeldetag: 11.05.1998
(51) Int. Cl.: F16L 37/092

(54) **Schnellkupplung**
Quick-acting connector
Raccord rapide

(30) Priorität: 28.06.1997 DE 19727538
(43) Veröffentlichungstag der Anmeldung: 30.12.1998
(73) Patentinhaber: HANSA METALLWERKE AG, 70567 Stuttgart (DE)
(72) Erfinder: Knödler, Willy, 73553 Alfdorf-Brech (DE)
(74) Vertreter: Ostertag, Ulrich, Dr.

(56) Entgegenhaltungen:
- EP-A- 0 268 511
- DE-C- 621 831
- US-A- 3 456 963

## Beschreibung

Die Erfindung betrifft eine Schnellkupplung zur Verbindung von Leitungen, Rohren oder Schläuchen, insbesondere von Kältemittelleitungen, mit
a) einer mit dem Ende der einen der beiden Leitungen od. dgl. verbindbaren Muffe;
b) einem mit dem Ende der anderen der beiden Leitungen od. dgl. verbindbaren Nippel, der mit einem im wesentlichen zylindrischen, mit einem äußeren Ringwulst versehenen Bereich in die Muffe einschiebbar ist;
c) einem an der Muffe festlegbarem Verriegelungselement, das beim Schließen und Öffnen der Schnellkupplung unter elastischer Verformung zumindest bereichsweise über den Ringwulst des Nippels schiebbar ist und aus einer Mehrzahl von verhältnismäßig formstabilen Gleitelementen und einer entsprechenden Mehrzahl Verbindungselementen zusammengesetzt ist.

Eine derartige Schnellkupplung wird in der DE 621 831 C beschrieben. Dort dient ein nicht vollständig geschlossener Sprengring mit aufgeschobenen Gleitelementen als Verriegelungselement. Dieser Sprengring weist eine Stoßstelle auf, die beim Einführen eines konischen Nippels durch den Sprengring auseinander gebogen wird. Dabei ensteht zunächst ein Gebilde, welches nicht mehr koaxial zum ursprünglichen Ring liegt. Um die Koaxialität wieder herzustellen, ist eine seitliche Verschiebung des Sprengringes erforderlich. Außerdem wächst der Abstand zwischen den Gleitelementen, die der Stoßstelle benachbart sind, während der Abstand zwischen den übrigen Gleitelementen gleich bleibt. Die Gleitelemente müssen sich also sowohl in Umfangsrichtung entlang der konischen Fläche des Nippels als auch radial bewegen. Diese Umsetzung der axialen Vorwärtsbewegung des Nippels in eine kombinierte Bewegung der Gleitelemente erfordert verhälnismäßig viel Kraft. Liegt, wie dies beim Stand der Technik der Fall ist, das Verriegelungselement gleichzeitig an einem dichtenden O-Ring an, wird dieser dichtende O-Ring ebenfalls in Umfangsrichtung verformt. Dies kann die Dichtigkeit der Verbindung im Laufe der Zeit beeinträchtigen.

Eine andere Bauweise einer Schnellkupplung ist in der DE 195 16 096 C beschrieben. Hier besitzt das Verriegelungselement die Form eines Käfiges, der, dem freien Ende der Muffe benachbart, einen geschlossen hohlzylindrischen Bereich aufweist. Von diesem erstrecken sich mit axialer Richtungskomponente einstückig zwei Sätze von streifenförmigen Fingern. Der erste dieser Sätze verläuft in rein axialer Richtung und dient der Positionierung des Verriegelungselementes innerhalb der Muffe, während der zweite Satz von Fingern sich konisch nach innen erstreckt und Verriegelungszwecken dient. Die freien Enden dieses zweiten Fingersatzes gleiten beim Schließen der Schnellkupplung unter elastischer Ausbiegung nach außen über den Ringwulst des Nippels hinweg und rasten danach hinter diesem Ringwulst ein, so daß ein Zurückziehen des Nippels nicht mehr möglich ist. Das hier zum Einsatz kommende käfigartige Verriegelungselement ist ein sehr kompliziertes und daher teueres Teil, das zudem aufgrund seiner axialen Erstreckung innerhalb der Muffe einen erheblichen Raum einnimmt.

Ähnliche Bauweisen von Schnellkupplungen sind in der DE 39 24 173 A, der US 50 69 424 A und der EP 0 193 271 B beschrieben.

Aufgabe der vorliegenden Erfindung ist es, eine Schnellkupplung der eingangs genannten Art derart auszugestalten, daß der Kupplungsvorgang mit geringem Kraftaufwand durchführbar ist und eine gleichbleibend hohe Dichtigkeit der Verbindung gewährleistet wird, wobei die Schnellkupplung besonders preiswert herzustellen und möglichst raumsparend ist.

Diese Aufgabe wird erfindungsgemäß dadurch gelöst, daß
d) das Verriegelungselement ein vollständig geschlossenes Ringteil ist und die zwischen den Gleitelementen liegenden Verbindungelemente als dehnungselastische Dehnelemente ausgebildet sind.

Anders als beim Stande der Technik, welcher sich bei der Verformbarkeit Verformbarkeit des Verriegelungselementes im wesentlichen auf die Aufweitung des Sprengringes bzw. die Biegeelastizität der angeformten Finger verläßt, macht die vorliegende Erfindung von einer echten radialen Aufweitung eines echt ringförmigen Verriegelungsteiles Gebrauch. Hierzu wird das Verriegelungselement funktional in verschiedene Bereiche aufgeteilt: Die Gleitelemente dienen der Berührung mit der Mantelfläche des Nippels und insbesondere des dort vorgesehenen Ringwulstes und bringen aufgrund der Reaktionskräfte, die sie auf der Außenmantelfläche erfahren, aufweitende Kräfte in das ringförmige Verriegelungselement ein. Diese Kräfte führen dann zu einer elastischen Dehnung der die Gleitelemente verbindenden Dehnelemente, die sich insbesondere beim Schieben des Verriegelungselementes über den Ringwulst längen, wodurch der Umfang des ringförmigen Verriegelungselementes und damit dessen Durchmesser vergrößert wird. Das erfindungsgemäß verwendete Verriegelungselement baut in axialer Richtung sehr kurz, da keine sich in axialer Richtung erstreckende Finger vorgesehen sind. Es ist außerdem sehr preiswert als einfaches Spritzteil herzustellen.

Besonders vorteilhaft unter Kostengesichtspunkten ist dabei diejenige Ausgestaltung der Erfindung, bei welcher das Verriegelungselement einstückig aus einem einheitlichen Material hergestellt ist, wobei die unterschiedliche Dehnbarkeit der Gleitelemente und der Dehnelemente durch unterschiedliche geometrische Abmessungen bestimmt ist. Ein derartiges Verriegelungselement, welches beispielsweise aus einem geeigneten Kunststoff hergestellt sein kann, ist ein besonders kostengünstiges Spritzteil.

Zusätzlich oder alternativ können die Gleitelemente und die Dehnelemente aus unterschiedlichen Materialien bestehen, wobei also die unterschiedliche Dehnbarkeit von Gleitelementen und Dehnelementen zumindest teilweise auf unterschiedliche Materialeigenschaften zurückgeht.

Die Gleitelemente können kugelige oder tonnenartige Form aufweisen. So sind sie spritztechnisch sehr leicht herzustellen und können gut über den Ringwulst am Nippel gleiten.

Eine vergleichbar günstige Alternative besteht darin, daß die Gleitelemente Ringsegmente sind.

Ein besonders bevorzugte Ausführungsform der Erfindung zeichnet sich dadurch aus, daß das Verriegelungselement in einer Nut an der Innenmantelfläche der Muffe axial fixiert ist und daß zwischen dem Grund der Nut und dem Verriegelungselement mindestens ein elastisches Element vorgesehen ist, welches eine radiale Aufweitung des Verriegelungselementes unter elastischer Verformung gestattet. Der Grund der Nut an der Muffe hat also bei dieser Ausführungsform einen Durchmesser, welcher größer als der Außendurchmesser des ringförmigen Verriegelungselementes ist. Der Spalt zwischen Verriegelungselement und Nutgrund wird durch mindestens ein elastisches Element, vorzugsweise zwei elastische Elemente, überbrückt. Dieses ermöglicht einerseits die erforderliche radiale Aufweitung des Verriegelungselementes, sorgt jedoch gleichzeitig für eine im wesentlichen spielfreie Verbindung zwischen Muffe und Verriegelungselement und dichtet den Innenraum der Muffe gegen das Eindringen von Verunreinigungen ab.

Die Kraft, mit welcher bei einer erfindungsgemäßen Schnellkupplung der Nippel gegenüber der Muffe geführt werden muß, hängt von der "Steilheit" der Anstiegsflanken des Ringwulstes auf dem Nippel, also dem Neigungswinkel dieser Anstiegsflanken gegenüber der Achse des Nippels ab: Um so steiler diese Anstiegsflanke ist, um so größer ist die Kraft, die beim "Ersteigen" dieser Anstiegsflanke durch die Gleitelemente des Verriegelungselementes in axialer Richtung aufgebracht werden muß. Insbesondere bei der Anwendung der erfindungsgemäßen Schnellkupplung für Kältemittelleitungen empfiehlt sich diejenige Ausgestaltung, bei welcher die dem freien Ende des Nippels benachbarte Anstiegsflanke des Ringwulstes gegenüber der Achse des Nippels einen verhältnismäßig kleinen Neigungswinkel aufweist, während die dem Befestigungsende des Nippels benachbarte Anstiegsflanke des Ringwulstes gegenüber der Achse des Nippels einen verhältnismäßig großen Neigungswinkel aufweist. Dies bedeutet, daß der Nippel unter verhältnismäßig geringem Kraftaufwand in die Muffe eingeschoben werden kann, daß aber das Zurückziehen des Nippels aus dem geschlossenen Zustand der Schnellkupplung ohne Zuhilfenahme eines besonderen Werkzeuges nicht möglich ist.

Die Muffe umfaßt zweckmäßigerweise zwei zylindrische Bereiche, die über eine radiale Stufe miteinander verbunden sind, wobei der dem freien Ende der Muffe nähere zylindrische Bereich einen Innendurchmesser aufweist, welcher dem Außendurchmesser des Nippels außerhalb des Ringwulstes entspricht, und wobei die Stufe zwischen den zylindrischen Bereichen der Muffe als Axialanschlag für das freie Ende des Nippels dient. Diese Ausgestaltung stellt sicher, daß bei geschlossener Schnellkupplung Nippel und Muffe in beiden axialen Richtungen fixiert sind: Ein Zurückziehen des Nippels verhindert das hinter dem Ringwulst "eingerastete" Verriegelungselement, während ein weiteres Vorschieben des Nippels in die Muffe hinein durch die Stufe zwischen den beiden zylindrischen Bereichen der Muffe unterbunden ist.

Ein Ausführungsbeispiel der Erfindung wird nachfolgend anhand der Zeichnung näher erläutert; es zeigen
- Figur 1:: die Seitenansicht einer erfindungsgemäßen Schnellkupplung, in der oberen Hälfte im Axialschnitt;
- Figur 2:: die Seitenansicht eines ringförmigen Verriegelungselementes, wie es in der Schnellkupplung von Figur 1 Verwendung findet;
- Figur 3:: die Draufsicht auf das ringförmige Verriegelungselement von Figur 1;
- Figur 4:: einen Ausschnitt aus Figur 1, in welcher die Entriegelung der Schnellkupplung verdeutlicht wird.

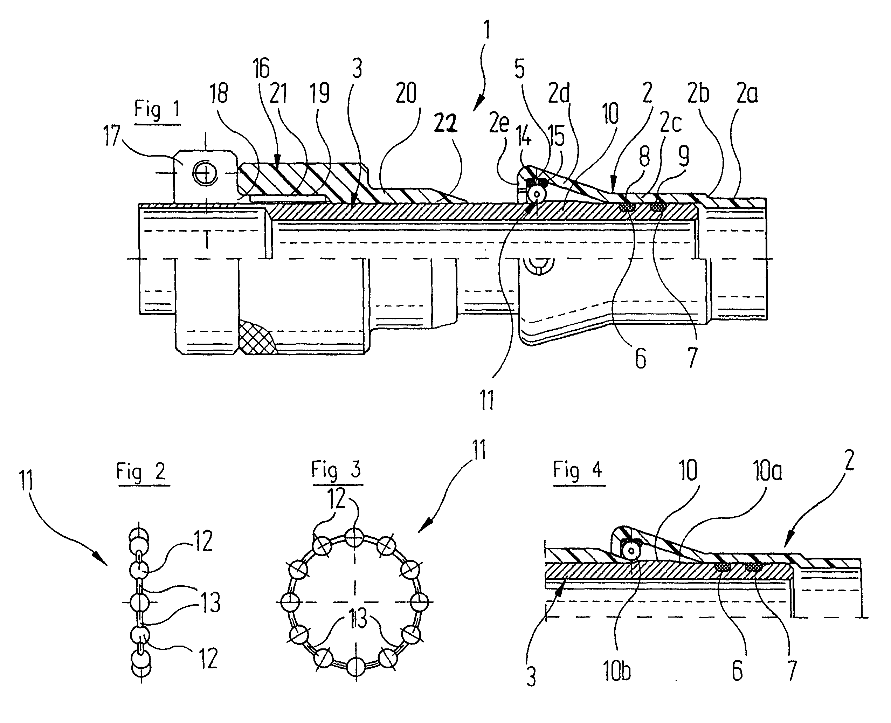

Zunächst wird auf Figur 1 Bezug genommen. Die insgesamt mit dem Bezugszeichen 1 gekennzeichnete Schnellkupplung umfaßt eine Muffe 2, die am Ende einer nicht dargestellten Kältemittelleitung dicht befestigt wird, sowie einen Nippel 3, der ebenfalls dicht am Ende einer nicht dargestellten Kältemittelleitung befestigt ist, die mit der erstgenannten Kältemittelleitung strömungsdicht verbunden werden soll.

Die Muffe 2 weist an ihrem in Figur 1 rechten Ende einen zylindrischen Bereich 2a auf, dessen Innendurchmesser auf den Außendurchmesser der hier zu befestigenden Kältemittelleitung abgestimmt ist. An diesen ersten zylindrischen Bereich 2a schließt sich über eine Stufe 2b ein zweiter zylindrischer Bereich 2c der Muffe 2 an, dessen Innendurchmesser etwas größer als der Innendurchmesser des Bereiches 2a und dem Außendurchmesser des im wesentlichen zylindrischen Nippels 3 angepaßt ist. An den zweiten zylindrischen Bereich 2c schließt sich weiter nach links in Figur 1 ein sich kegelig auf das freie Ende der Muffe 2 hin erweiternder Bereich 2d an, der von einem nach innen umgebogenen, im wesentlichen radial verlaufenden Ringflansch 2e abgeschlossen wird. Im Übergangsbereich zwischen dem Ringflansch 2e und dem kegelig verlaufenden Bereich 2d der Muffe 2 ist eine Nut 5 ausgebildet.

Der Nippel 3 ist in seiner Grobform, wie bereits erwähnt, zylindrisch. Von dieser Zylinderform gibt es allerdings drei Abweichungen: In der Nähe des freien Endes des Nippels 3 weist dieser zwei Ringnuten 6, 7 auf, in denen jeweils ein Dichtring 8, 9 einliegt. Die Anordnung ist offensichtlich so, daß in dem in Figur 1 dargestellten, geschlossenen Zustand der Schnellkupplung 1 durch die Dichtungen 8, 9 ein dichter Übergang des Kältemittels aus der einen Kältemittelleitung durch die Innenbohrung des Nippels 3 in die an der Muffe 2 anzuschließende andere Kältemittelleitung gewährleistet ist.

Die dritte Abweichung des Nippels 3 von der rein zylindrischen Form besteht in einem auf der Außenmantelfläche in etwas größerem Abstand als die Nuten 6, 7 vom freien Ende ausgebildeten Ringwulst 10. Der Übergang von dem im Bereich des Ringwulstes 10 etwas vergrößerten Durchmesser zu dem "normalen" Durchmesser des Nippels 3 beidseits des Ringwulstes 10 erfolgt über zwei Anstiegsflanken 10a und 10b. Die dem freien Ende des Nippels 3 zugewandte und damit den Nuten 6, 7 benachbarte Anstiegsflanke 10a steigt verhältnismäßig sanft an, besitzt also einen verhältnismäßig geringen Neigungswinkel gegenüber der Achse des Nippels 3, während die gegenüberliegende, Flanke 10b mit einem vergleichsweise großen Anstiegswinkel gegenüber der Achse des Nippels 3 versehen ist und sich dementsprechend über einen verhältnismäßig kurzen Weg in axialer Richtung erstreckt.

Die Fixierung der Muffe 2 auf dem Nippel 3 erfolgt mit Hilfe eines ringförmigen Verriegelungselementes 11, welches in den Figuren 2 und 3 näher dargestellt ist. Es umfaßt eine Vielzahl kugeliger Gleitelemente 12, die über eine entsprechende Anzahl verhältnismäßig schmaler, elastischer Dehnelemente 13 miteinander verbunden sind. Bei dem in der Zeichnung dargestellten Ausführungsbeispiel ist das gesamte Verriegelungselement 11 aus ein und demselben Kunststoff gespritzt. Unterschiedliche elastische Eigenschaften der kugelförmigen Gleitelemente 12 einerseits und der elastischen Dehnelemente 13 andererseits ergeben sich ausschließlich aus deren unterschiedlichen geometrischen Abmessungen. Dies ist die preiswerteste Art, ein derartiges Verriegelungselement 11 herzustellen. Grundsätzlich ist es jedoch auch möglich, die unterschiedlichen Elastizitätseigenschaften von Gleitstücken 12 und den Elementen 13 durch eine entsprechende Materialwahl herbeizuführen.

Das ringförmige Verriegelungselement 11 sitzt, wie dies den Figuren 1 und 4 zu entnehmen ist, in der Nut 5 der Muffe 2 unter Zwischenschaltung zweier elasticher O-Ringe 14, 15 ein. Die Anordnung ist so, daß das Verriegelungselement 11 durch die Nut 5 zwar in axialer Richtung fixiert ist, sich jedoch aufgrund der Elastizität der O-Ringe 14, 15 in radialer Richtung aufweiten kann.

Die Funktionsweise der oben beschriebenen Schnellkupplung 1 ist wie folgt:

Zunächst sei der Nippel 3 der Schnellkupplung 1 aus der Muffe 2 vollständig herausgezogen gedacht; das elastische Verriegelungselement 11 sitzt, wie in der Zeichnung dargestellt, in der Nut 5 der Muffe 2. Die Dehnelemente 13 des Verriegelungselementes 11 haben sich in den im wesentlichen spannungsfreien Zustand zusammengezogen, in welcher der Durchmesser des Kreises, der tangential an die inneren Begrenzungslinien der kugeligen Gleitelemente 12 gelegt wird, seinen kleinsten Wert hat. Zur Verbindung von Nippel 3 und Muffe 2 wird nunmehr der Nippel 3 mit seinem freien Ende voraus durch die Öffnung innerhalb des Ringflansches 2e in den Innenraum der Muffe 2 hineingeschoben. Nun trifft die bei dieser Bewegung vorauseilende Anstiegsflanke 10a des Ringwulstes 10 des Nippels 3 auf die Gleitstücke 12 des Verriegelungselementes 11. Diese Gleitstücke 12 wandern unter elastischer Dehnung der Dehnelemente 13 auf der Anstiegsflanke 10a nach oben. Diese radiale Aufweitung des Verriegelungselementes 11 wird von einer entsprechenden Kompression der in der Nut 5 der Muffe 2 einsitzenden O-Ringe 14, 15 begleitet. Beim weiteren Vorschieben des Nippels 3 geraten die Gleitelemente 12 des Verriegelungselementes 11 in den Bereich der bei dieser Bewegungsrichtung nacheilenden Anstiegsflanke 10b des Ringwulstes 10 am Nippel 3. Sie gleiten an dieser Anstiegsflanke 10b herab; zu diesem Zeitpunkt ist das freie Ende des Nippels 3 in der Nähe der Stufe 2b der Muffe 2 angelangt.

Aufgrund des verhältnismäßig großen Anstellwinkels der Anstiegsflanke 10b am Ringwulst 10 des Nippels 3 ist es nun nicht mehr möglich, durch einen einfachen axialen Zug in Figur 1 nach rechts die Muffe 2 wieder von dem Nippel 3 abzuziehen. Die Muffe 2 ist also zunächst dauerhaft und zugfest und aufgrund der Dichtungen 8, 9 auch kältemitteldicht am Nippel 3 fixiert.

Das Lösen der beschriebenen Schnellkupplung 1 erfolgt bei Bedarf mit Hilfe eines speziellen Abziehwerkzeuges 16, welches auf die Außenmantelfläche des Nippels 3 in dessen der Kältemittelleitung benachbartem Bereich aufgeschoben ist. Das Abziehwerkzeug 16 umfaßt ein auf der Außenmantelfläche des Nippels 3 befestigtes stationäre Teil 17, welches an einem sich in Figur 1 nach rechts erstreckenden zylindrischen Ansatz 18 ein Außengewinde 19 trägt.

Zum Abziehwerkzeug 16 gehört außerdem ein verdrehbares Teil 20, welches in seinem in Figur 1 linken Bereich ein mit dem Außengewinde 19 zusammenwirkendes Innengewinde 21 besitzt. Der in Figur 1 rechte, der Muffe 2 zugewandte Endbereich 22 verjüngt sich konisch zum freien Ende hin und zwar mit einem Neigungswinkel gegenüber der Achse des Teiles 20, der verhältnismäßig klein ist, vergleichbar etwa dem Neigungswinkel der Flanke 10a am Ringwulst 10 des Nippels 3.

Soll die Schnellkupplung 1 aus der in Figur 1 dargestellten Position gelöst werden, wird das drehbare Teil 20 so verdreht, daß es sich aufgrund der wechselwirkenden Gewinde 19, 21 nach rechts bewegt. Der konische Endbereich 22 des drehbaren Teils 20 dringt dabei durch die Öffnung im Ringflansch 2e der Muffe 2 in den Innenraum der Muffe 2 und trifft dort auf die Gleitstücke 12 des ringförmigen Verriegelungselementes 11. Im Zuge dieser Bewegung wird das ringförmige Verriegelungselement 11 unter Dehnung der Dehnbereiche 13 radial in ähnlicher Weise aufgeweitet, wie dies beim Schließen der Schnellkupplung 1 an der Flanke 10a des Ringwulstes 10 des Nippels 3 geschah. Ist auf diese Weise das ringförmige Verriegelungselement 11 ausreichend aufgeweitet, liegen also die inneren Begrenzungslinien der Gleitelemente 12 auf einem Kreis, der größer als der Außendurchmesser des Ringwulstes 10 am Nippel 3 ist, kann die Muffe 2 problemlos nach rechts abgezogen werden; die beiden Kupplungsteile 2, 3 sind nun wieder voneinander gelöst.

## Patentansprüche

1. Schnellkupplung (1) zur Verbindung von Leitungen, Rohren oder Schläuchen, insbesondere Kältemittelleitungen,
mit
a) einer mit dem Ende der einen der beiden Leitungen oder dergleichen verbindbaren Muffe (2);
b) einem mit dem Ende der anderen der beiden Leitungen oder dergleichen verbindbaren Nippel (3), der mit einem im Wesentlichen zylindrischen, mit einem äußeren Ringwulst (10) versehenen Bereich in die Muffe (2) einschiebbar ist;
c) einem an der Muffe (2) festlegbaren Verriegelungselement (11), das beim Schließen und Öffnen der Schnellkupplung (1) unter elastischer Verformung zumindest bereichsweise über den Ringwulst (10) des Nippels (3) schiebbar ist und aus einer Mehrzahl von verhältnismäßig formstabilen Gleitelementen (12) und einer entsprechenden Mehrzahl von Verbindungselementen (13) zusammengesetzt ist,
**dadurch gekennzeichnet, dass**
d) das Verriegelungselement (11) ein vollständig geschlossenes Ringteil ist und die zwischen den Gleitelementen (12) liegenden Verbindungselemente als dehnungselastische Dehnelemente (13) ausgebildet sind.

2. Schnellkupplung nach Anspruch 1, **dadurch gekennzeichnet, daß** das Verriegelungselement (11) einstückig aus einem einheitlichen Material hergestellt ist, wobei die unterschiedliche Dehnbarkeit der Gleitelemente (12) und der Dehnelemente (13) durch unterschiedliche geometrische Abmessungen bestimmt ist.

3. Schnellkupplung nach Anspruch 1 oder 2, **dadurch gekennzeichnet, daß** die Gleitelemente und die Dehnelemente aus unterschiedlichen Materialien bestehen.

4. Schnellkupplung nach einem der vorhergehenden Ansprüche, **dadurch gekennzeichnet, daß** die Gleitelemente (12) kugelige oder tonnenartige Form besitzen.

5. Schnellkupplung nach einem der Ansprüche 1 bis 3, **dadurch gekennzeichnet, daß** die Gleitelemente Ringsegmente sind.

6. Schnellkupplung nach einem der vorhergehenden Ansprüche, **dadurch gekennzeichnet, daß** das Verriegelungselement (11) in einer Nut (5) an der Innenmantelfläche der Muffe (2) axial fixiert ist und daß zwischen dem Grund der Nut (5) und dem Verriegelungselement (11) mindestens ein elastisches Element (14, 15) vorgesehen ist, welches eine radiale Aufweitung des Verriegelungselementes (11) unter elastischer Verformung gestattet.

7. Schnellkupplung nach einem der vorhergehenden Ansprüche, **dadurch gekennzeichnet, daß** die dem freien Ende des Nippels (3) benachbarte Anstiegsflanke (10a) des Ringwulstes (10) gegenüber der Achse des Nippels (3) einen verhältnismäßig kleinen Neigungswinkel aufweist, während die dem Befestigungsende des Nippels (3) benachbarte Anstiegsflanke (10b) des Ringwulstes (10) gegenüber der Achse des Nippels (3) einen verhältnismäßig großen Neigungswinkel aufweist.

8. Schnellkupplung nach einem der vorhergehenden Ansprüche, **dadurch gekennzeichnet, daß** die Muffe (2) zwei zylindrische Bereiche (2a, 2c) umfaßt, die über eine radiale Stufe (2b) miteinander verbunden sind, wobei der dem freien Ende der Muffe (2) nähere zylindrische Bereich (2c) einen Innendurchmesser aufweist, welcher dem Außendurchmesser des Nippels (3) außerhalb des Ringwulstes (10) entspricht, und wobei die Stufe (2b) zwischen den zylindrischen Bereichen (2a, 2c) der Muffe (2) als Axialanschlag für das freie Ende des Nippels (3) dient.

## Claims

1. Rapid action coupling (1) for connecting lines, pipes or hoses, in particular refrigerant lines,
comprising
a) a coupling sleeve (2) connectable to the end of one of the two lines or the like;
b) a nipple (3), which is connectable to the end of the other of the two lines or the like and insertable by a substantially cylindrical region provided with an outer annular bead (10) into the coupling sleeve (2);
c) a locking element (11), which is fastenable to the coupling sleeve (2) and pushable during closing and opening of the rapid action coupling (1) with simultaneous elastic deformation at least in sections over the annular bead (10) of the nipple (3) and is composed of a plurality of dimensionally relatively stable sliding elements (12) and a corresponding number of connecting elements (13),
**characterized in that**
d) the locking element (11) is a completely closed annular part and the connecting elements lying between the sliding elements (12) take the form of elastically expansible expansion elements (13).

2. Rapid action coupling according to claim 1, **characterized in that** the locking element (11) is manufactured in one piece from a homogeneous material, wherein the different expansibility of the sliding elements (12) and the expansion elements (13) is determined by different geometric dimensions.

3. Rapid action coupling according to claim 1 or 2, **characterized in that** the sliding elements and the expansion elements are made of different materials.

4. Rapid action coupling according to one of the preceding claims, **characterized in that** the sliding elements (12) have a spherical or barrel-like shape.

5. Rapid action coupling according to one of claims 1 to 3, **characterized in that** the sliding elements are ring segments.

6. Rapid action coupling according to one of the preceding claims, **characterized in that** the locking element (11) is fixed axially in a groove (5) in the inner lateral surface of the coupling sleeve (2) and that provided between the base of the groove (5) and the locking element (11) is at least one elastic element (14, 15), which allows radial expansion of the locking element (11) with simultaneous elastic deformation.

7. Rapid action coupling according to one of the preceding claims, **characterized in that** the rising edge (10a of the annular bead (10) adjacent to the free end of the nipple (3) has a relatively small angle of inclination relative to the axis of the nipple (3), while the rising edge (10b) of the annular bead (10) adjacent to the fastening end of the nipple (3) has a relatively large angle of inclination relative to the axis of the nipple (3).

8. Rapid action coupling according to one of the preceding claims, **characterized in that** the coupling sleeve (2) comprises two cylindrical regions (2a, 2c), which are connected to one another by a radial step (2b), wherein the cylindrical region (2c) closer to the free end of the coupling sleeve (2) has an inside diameter corresponding to the outside diameter of the nipple (3) outside of the annular bead (10), and wherein the step (2b) between the cylindrical regions (2a, 2c) of the coupling sleeve (2) serves as an axial stop for the free end of the nipple (3).

## Revendications

1. Raccord rapide (1) pour l'assemblage de conduites, tubes ou tuyaux, en particulier des conduites pour fluide frigorigène,
comprenant
a) un embout femelle (2) à assembler à l'extrémité de l'une des deux conduites ou éléments similaires ;
b) un embout mâle (3) à assembler à l'extrémité de l'autre des deux conduites ou éléments similaires, qui peut être inséré dans l'embout femelle (2) avec une zone sensiblement cylindrique, munie d'un bourrelet circulaire ou annulaire (10) extérieur ;
c) un élément de blocage (11), qui est destiné à être fixé contre l'embout femelle (2) et qui, au moment de la fermeture et de l'ouverture du raccord rapide (1), coulisse moyennant une déformation élastique au moins partiellement au-dessus du bourrelet circulaire (10) et est formé par une pluralité d'éléments de glissement (12) à forme relativement stable et une pluralité correspondante d'éléments de liaison (13),
**caractérisé en ce que**
d) l'élément de blocage (11) est une bague ou pièce annulaire complètement fermée et les éléments de liaison situés entre les éléments de glissement (12) sont conçus sous forme d'éléments extensibles (13) à allongement élastique.

2. Raccord rapide selon la revendication 1, **caractérisé en ce que** l'élément de blocage (11) est réalisé d'une seule pièce dans un même matériau, l'extensibilité différente des éléments de glissement (12) et des éléments extensibles (13) étant déterminée par différentes dimensions géométriques

3. Raccord rapide selon 1a revendication 1 ou 2, **caractérisé en ce que** les éléments de glissement (12) et les éléments extensibles (13) sont réalisés dans des matériaux différents.

4. Raccord rapide selon l'une quelconque des revendications précédentes, **caractérisé en ce que** les éléments de glissement (12) ont une forme sphérique ou semi-sphérique.

5. Raccord rapide selon l'une quelconque des revendications 1 à 3, **caractérisé en ce que** les éléments de glissement (12) sont des segments de cercle ou d'anneau.

6. Raccord rapide selon l'une quelconque des revendications précédentes, **caractérisé en ce que** l'élément de blocage (11) est bloqué dans le sens axial dans une gorge (5) au niveau de la paroi latérale intérieure de l'embout femelle (2) et **en ce que**, entre le fond de la gorge (5) et l'élément de blocage (11), est prévu au moins un élément élastique (14, 15), qui permet un élargissement radial de l'élément de blocage (11) sous l'effet d'une déformation élastique.

7. Raccord rapide selon l'une quelconque des revendications précédentes, **caractérisé en ce que** le flanc de butée (10a du bourrelet circulaire (10), à proximité de l'extrémité libre de l'embout mâle (3), forme un angle d'inclinaison relativement petit par rapport à l'axe de l'embout mâle (3), alors que le flanc de butée (10b du bourrelet circulaire (10), à proximité de l'extrémité de fixation de l'embout mâle (3), forme un angle d'inclinaison relativement grand par rapport à l'axe de l'embout mâle (3).

8. Raccord rapide selon l'une quelconque des revendications précédentes, **caractérisé en ce que** l'embout femelle (2) comporte deux zones cylindriques (2a, 2c), qui sont reliées entre elles par l'intermédiaire d'un décrochement (2b) radial, la zone cylindrique (2c) plus proche de l'extrémité libre de l'embout femelle (2) possédant un diamètre intérieur égal au diamètre extérieur de l'embout mâle (3) en dehors du bourrelet circulaire (10), et le décrochement (2b) entre les deux zones cylindriques (2a, 2c) de l'embout femelle (2) faisant fonction de butée axiale pour l'extrémité libre de l'embout mâle (3).
